# EUROPEAN PATENT APPLICATION

(11) **EP 4 823 196 A1**
(43) Date of publication of application: **14.10.2026**
(21) Application number: 23960472.1
(22) Date of filing: 05.12.2023
(51) Int. Cl.: H04W 64/00

(54) **METHOD AND APPARATUS FOR POSITIONING, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); SHI, Zhihua, Dongguan, Guangdong 523860 (CN)
(74) Representative: Novagraaf Technologies
(86) International application number: PCT/CN2023/136562
(87) International publication number: WO 2025/118158

(57) **Abstract**

A method and apparatus for positioning, a device, and a storage medium, belonging to the technical field of mobile communications. The method is executed by a first device. The method comprises: acquiring positioning indication information (810); and on the basis of the positioning indication information, determining position information and compensation information (820), the position information being used for indicating the position of a terminal device, and the compensation information being used for compensating for errors caused by the influence of interference factors on the position information.

## Description

### TECHNICAL FIELD

The present disclosure relates to the field of mobile communication technology, specifically to a positioning method and apparatus, and a device and storage medium thereof.

### RELATED ART

In the new radio (NR) system, through measuring the reference signals used for positioning, the terminal device or network equipment can position the terminal device.

In the related art, in order to improve the accuracy of positioning, a positioning method combining artificial intelligence (AI)/machine learning (ML) models with positioning technology is currently being considered to achieve the positioning of terminal devices.

### SUMMARY

Embodiments of the present disclosure provide a positioning method and apparatus, a device and storage medium thereof. The technical solution is as follows.

In an aspect, the embodiments of the present disclosure provide a positioning method, which is performed by a first device and includes:
acquiring positioning indication information;
determining location information and compensation information based on the positioning indication information;
wherein the location information is used to indicate a location of a terminal device, and the compensation information is used to compensate for an error caused by an interference factor affecting the location information.

In an aspect, the embodiments of the present disclosure provide a positioning method, which is performed by a second device and includes:
transmitting positioning indication information to a first device, causing the first device to determine location information and compensation information based on the positioning indication information;
wherein the location information is used to indicate a location of a terminal device, and the compensation information is used to compensate for an error caused by an interference factor affecting the location information.

In another aspect, the embodiments of the present disclosure provide a positioning apparatus, which includes:
an information acquisition module, configured to acquire positioning indication information; and
a positioning module, configured to determine location information and compensation information based on the positioning indication information;
wherein the location information is used to indicate a location of a terminal device, and the compensation information is used to compensate for an error caused by an interference factor affecting the location information.

In another aspect, the embodiments of the present disclosure provide a positioning apparatus, which includes:
a transmitting module, configured to transmit positioning indication information to a first device, causing the first device to determine location information and compensation information based on the positioning indication information;
wherein the location information is used to indicate a location of a terminal device, and the compensation information is used to compensate for an error caused by an interference factor affecting the location information.

In another aspect, the embodiments of the present disclosure provide a communication device, which includes a processor, a memory, and a transceiver;
wherein the memory stores a computer program, and the computer program, when executed by the processor, causes the communication device to perform the positioning method as described above.

In yet another aspect, the embodiments of the present disclosure further provide a computer-readable storage medium, in which a computer program is stored. The computer program, when loaded and executed by a processor, causes the processor to perform the positioning method as described above.

In yet another aspect, the present disclosure also provides a chip, which includes an integrated circuit and firmware arranged in the integrated circuit. The chip, when running in a communication device, causes the communication device to perform the positioning method as described above.

In yet another aspect, the present disclosure provides a computer program product, which includes one or more computer instructions stored in a computer-readable storage medium. The one or more computer instructions, when read from the computer-readable storage medium and executed by a processor of a communication device, cause the communication device to perform the positioning method as described above.

In yet another aspect, the present disclosure provides a computer program, wherein the computer program, when executed by a processor of a communication device, causes the communication device to perform the positioning method as described above.

The embodiments of the present disclosure provide a positioning scheme, wherein the first device can obtain, based on positioning indication information, location information indicating the location of the terminal device and compensation information for compensating for the error caused by the interference factor affecting the location information. In the scheme, based on the positioning indication information, not only can the location information be obtained, but also the compensation information for compensating for the positioning error caused by the interference factor can be obtained. Therefore, the positioning result can be corrected using the compensation information to reduce the impact of the interference factor on the positioning result, thereby improving the accuracy of positioning.

### BRIEF DESCRIPTION OF DRAWINGS

FIG. 1 is a schematic diagram of the architecture of a communication system according to an embodiment of the present disclosure.
FIG. 2 is a structural diagram of neurons involved in the present disclosure.
FIG. 3 is a schematic diagram of a neural network involved in the present disclosure.
FIG. 4 is a structural diagram of a convolutional neural network (CNN) involved in the present disclosure.
FIG. 5 is a structural diagram of a long-short term memory (LSTM) unit involved in the present disclosure.
FIG. 6 is a schematic flowchart of a downlink-based positioning method involved in the present disclosure.
FIG. 7 is a schematic flowchart of an uplink-based positioning method involved in the present disclosure.
FIG. 8 is a flowchart of a positioning method according to an embodiment of the present disclosure.
FIG. 9 is a flowchart of a positioning method according to an embodiment of the present disclosure.
FIG. 10 is a flowchart of a positioning method according to an embodiment of the present disclosure.
FIG. 11 is a schematic diagram of a method for positioning compensation based on a second reference signal involved in the present disclosure.
FIG. 12 is a schematic diagram of a method for positioning compensation based on a compensation model involved in the present disclosure.
FIG. 13 is a block diagram of a positioning apparatus according to an embodiment of the present disclosure.
FIG. 14 is a block diagram of a positioning apparatus according to an embodiment of the present disclosure.
FIG. 15 is a structural schematic diagram of a communication device according to an embodiment of the present disclosure.

### DETAILED DESCRIPTION

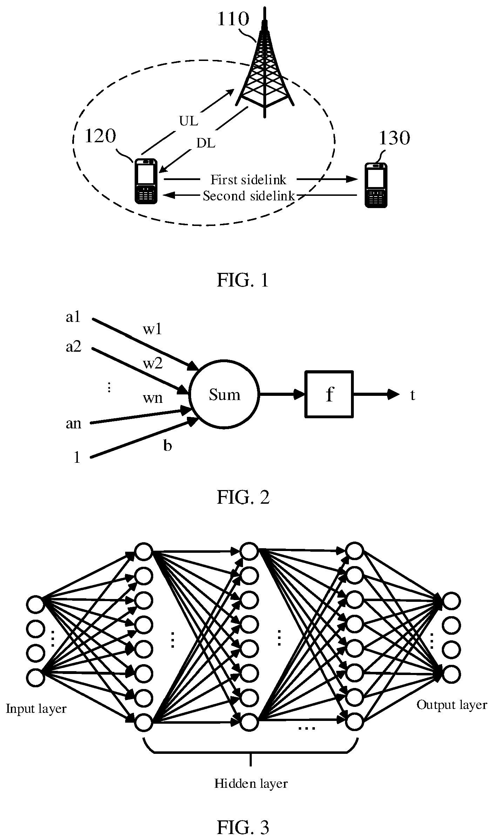

FIG. 1 is a schematic diagram of a communication system involved in exemplary embodiments of the present disclosure. The communication system includes a network device 110 and a terminal device 120, and/or a terminal device 120 and a terminal device 130, which are not limited in the present disclosure.

The network device 110 in the present disclosure provides wireless communication functions, and includes but is not limited to: an evolved Node B (eNB), a radio network controller (RNC), a Node-B (NB), a base station controller (BSC), a base transceiver station (BTS), a home evolved Node-B (or a home Node-B (HNB)), a baseband unit (BBU), an access point (AP) in a wireless fidelity (Wi-Fi) system, a wireless relay node, a wireless backhaul node, a transmission point (TP), or a transmission and reception point (TRP), etc. The network device 110 may also be a next generation Node-B (gNB) or a transmission point (TRP or TP) in a 5^{th} generation (5G) mobile communication system, or one antenna panel or a group of (including a plurality of antenna panels) antenna panels of a base station in the 5G system, or a network node constituting a gNB or a transmission point, such as a BBU or a distributed unit (DU), etc. The network device 110 may also refer to a base station in a beyond-fifth generation (B5G) or 6^{th} generation (6G) mobile communication system, or a core network (CN), fronthaul, backhaul, a radio access network (RAN), a network slice, etc.,; or a serving cell, a primary cell (PCell), a primary secondary cell (PSCell), a special cell (SpCell), a secondary cell (SCell), or a neighboring cell of a terminal device, or the like.

At least one of the terminal device 120 or the terminal device 130 in the present disclosure is also referred to as a user equipment (UE), an access terminal, a subscriber unit, a subscriber station, a mobile station, a remote station, a remote terminal, a mobile device, a user terminal, a terminal, a wireless communication device, a user agent, or a user device. The terminal device includes but is not limited to: a handheld device, a wearable device, a vehicle-mounted device, and an Internet of things (IoT) device, such as a mobile phone, a tablet computer, an e-book reader, a laptop computer, a desktop computer, a TV, a game console, a mobile Internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical technology, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), or a customer premise equipment (CPE), or the like.

The network device 110 and the terminal device 120 communicate with each other via an air interface technology, such as a Uu interface.

Illustratively, there are two communication scenarios between the network device 110 and the terminal device 120: an uplink communication scenario and a downlink communication scenario. The uplink communication refers to transmitting signals to the network device 110. The downlink communication refers to transmitting signals to the terminal device 120.

The terminal device 120 and the terminal device 130 communicate with each other via an air interface technology, such as a PC5 interface.

In some embodiments, two communication scenarios are present between the terminal device 120 and the terminal device 130, namely, a first sidelink communication scenario and a second sidelink communication scenario. The first sidelink communication refers to transmitting signals to the terminal device 130. The second sidelink communication refers to transmitting signals to the terminal device 120.

Both the terminal device 120 and the terminal device 130 are within the network coverage and located in the same cell, or both the terminal device 120 and the terminal device 130 are within the network coverage but located in different cells, or the terminal device 120 is within the network coverage but the terminal device 130 is outside the network coverage.

The technical solutions according to the embodiments of the present disclosure is applicable to various communication systems, such as a global system of mobile communication (GSM) system, a code-division multiple access (CDMA) system, a wideband code-division multiple access (WCDMA) system, a general packet radio service (GPRS), a long-term evolution (LTE) system, an LTE frequency-division duplex (FDD) system, an LTE time-division duplex (TDD) system, an advanced LTE (LTE-A) system, a universal mobile telecommunication system (UMTS), a worldwide interoperability for microwave access (WiMAX) communication system, a 5G mobile communication system, an NR system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN), a Wi-Fi system, a cellular IoT system, or a cellular passive IoT system. The technical solutions according to the embodiments of the present disclosure may also be applied to a subsequent evolved system of the 5G NR system, as well as to B5G, 6G, and subsequent evolved systems. In some embodiments of the present disclosure, "NR" may also be referred to as a 5G NR system or a 5G system. The 5G mobile communication system can include non-standalone (NSA) and/or standalone (SA).

The technical solutions according to the embodiments of the present disclosure may also be applied to a machine-type communication (MTC), an LTE-Machine (LTE-M), a device-to-device (D2D) network, a machine-to-machine (M2M) network, an IoT network, or other networks. The IoT network may include, for example, an Internet of vehicles (IoV). Communication methods in an IoV system are collectively referred to as vehicle-to-X (i.e., V2X, where X represents any object), such as vehicle-to-vehicle (V2V) communications, vehicle-to-infrastructure (V2I) communications, vehicle-to-pedestrian (V2P) communications, or vehicle-to-network (V2N) communications.

### 1) Neural network and machine learning

A neural network is a computational model composed of a plurality of interconnected neuron nodes, where the connections between the nodes represent weighted values from input signals to output signals, known as weights. Each node performs weighted summation on different input signals and outputs through a specific activation function. The neuron structure diagram involved in the present disclosure is shown in FIG. 2.

A schematic diagram of a neural network involved in the present disclosure is shown in FIG. 3, which includes an input layer, a hidden layer, and an output layer. Through different connection modes of a plurality of neurons, weights, and activation functions, different outputs may be generated, thereby fitting the mapping relationship from input to output. Each upper-level node is connected to all its lower-level nodes. This fully connected model can also be referred to as a deep neural network (DNN).

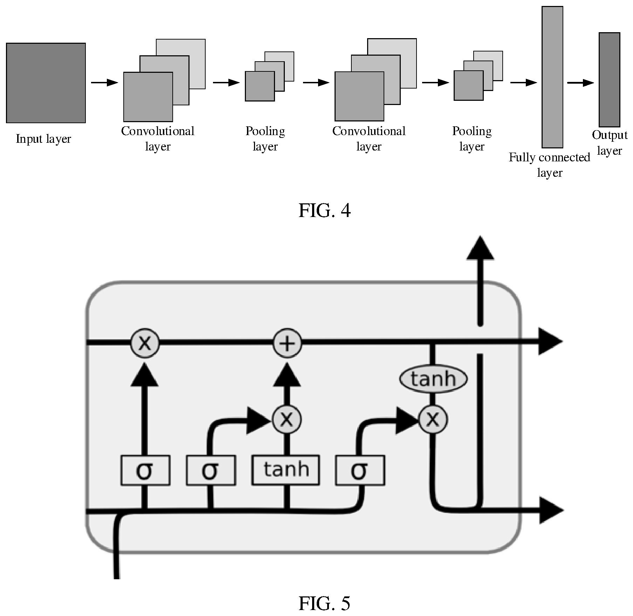

Another neural network involved in the present disclosure may be a CNN. The basic structure of a CNN includes an input layer, a plurality of convolutional layers, a plurality of pooling layers, a fully connected layer, and an output layer, as shown in FIG. 4, which is a structural diagram of a CNN involved in the present disclosure. In the convolutional layer, each neuron of the convolution kernel is locally connected to its input. In addition, the pooling layer is introduced to extract the maximum or average value features of a certain layer's local area, such that parameters of the network are effectively reduced, and local features are explored, enabling the convolutional neural network to converge quickly and achieve excellent performance.

Another neural network involved in the present disclosure may be a recurrent neural network (RNN). RNN is a neural network that models sequential data and has achieved remarkable results in natural language processing fields such as machine translation and speech recognition. Specifically, the network remembers information from past moments and uses it in the calculation for current output, meaning that the nodes between hidden layers are no longer unconnected but connected, and the input to the hidden layer comes not only from the input layer but also from the output of the hidden layer at the previous moment. Commonly used RNNs include structures such as LSTM networks and gated recurrent units (GRUs). FIG. 5 is a structure diagram of an LSTM unit involved in the present disclosure. Unlike RNNs, which only consider the most recent state, LSTM's cell state is used to determine which states should be retained and which should be forgotten, addressing the shortcomings of conventional RNNs in long-term memory.

### 2) Conventional positioning technology

The positioning methods may be categorized as follows.
i. UE-based positioning method: The terminal directly calculates the location of the target UE.
ii. UE-assisted/LMF-based positioning method: The terminal reports measurement results to a Location Management Function (LMF), which calculates the location of the target UE based on the collected measurement results.
iii. Next generation RAN (NG-RAN) node-assisted positioning method: The base station reports measurement results of a TRP to the LMF, which calculates the location of the target UE based on the collected measurement results.

In conventional positioning methods, the UE or LMF applies conventional algorithms, such as Chan's algorithm, Taylor series expansion, or other algorithms, to estimate the location of the terminal device for different methods.

To support various positioning methods, Rel-16 NR introduces a positioning reference signal (PRS) in the downlink and a sounding reference signal (SRS) for positioning (e.g., SRS for positioning) in the uplink.

NR-based positioning functionality primarily involves three major entities.
i. Terminal Device (i.e., UE).
ii. A plurality of network TRPs; wherein a plurality of TRPs around the UE may participate in cellular positioning for the UE; a base station may be a single TRP, or a base station may include a plurality of TRPs.
iii. Location Server; wherein the location server is responsible for the entire positioning procedure, and typically includes an LMF.

A downlink-based positioning method may be further divided into two major categories.
i. UE-assisted positioning method, wherein the UE is responsible for positioning-related measurements, and the network device calculates location information based on measurement results reported by the UE.
ii. UE-based positioning method, wherein the UE performs positioning-related measurements and calculates location information based on measurement results.

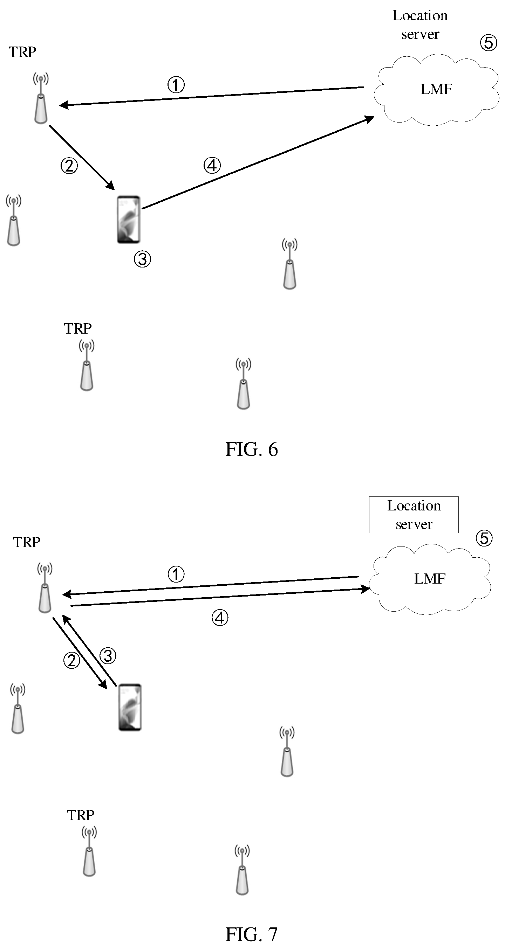

Referring to FIG. 6, it is a schematic flowchart of a downlink-based positioning method involved in the present disclosure. As shown in FIG. 6, the basic process of positioning is illustrated by taking a downlink-based positioning method (UE-assisted positioning method) as an example.

In S1, a location server notifies a TRP of associated configurations, wherein the associated configurations of the TRP may include PRS configuration information, and/or types of measurement results that a terminal device needs to report, etc.

In S2, the TRP transmits a PRS.

In S3, the terminal device receives the PRS and performs measurements, wherein measurement results required by the terminal device may vary depending on different positioning methods.

In S4, the terminal device feeds back the measurement results to the location server. For example, the terminal device may feed back the measurement results to the location server via a base station.

In S5, the location server calculates location-related information.

The above is a schematic flow of the UE-assisted positioning method. For the UE-based positioning method, in the fourth step (S4) mentioned above, the terminal device directly calculates the location-related information based on the measurement results, without the need to report the measurement results to the location server for subsequent calculation by the network element. In the UE-based positioning method, the terminal device needs to know the location information corresponding to the TRP, thus the network device needs to notify the UE of the location information corresponding to the TRP in advance.

Referring to FIG. 7, it is a schematic flowchart of an uplink-based positioning method involved in the present disclosure. As shown in FIG. 7, the basic process of positioning is illustrated hereinafter by taking an uplink-based positioning method as an example.

In S1, a location server notifies a TRP of associated configurations.

In S2, the base station transmits relevant signaling to a terminal.

In S3, the terminal transmits an uplink signal (SRS for positioning) accordingly.

In S4, the TRP measures the SRS for positioning and transmits measurement results to the location server.

In S5, the location server calculates location-related information.

### 3) Standard progress of AI/ML positioning technology

To further enhance positioning accuracy, Rel-18 has initiated discussions on positioning methods that integrate AI/ML with positioning technology. There are several potential cases.
Case 1: A UE-based positioning method with AI/ML models deployed on the UE side.
Case 2a: A UE-assisted/LMF-based positioning method with AI/ML models deployed on the UE side.
Case 2b: A UE-assisted/LMF-based positioning method with AI/ML models deployed on the LMF side.
Case 3a: An NG-RAN node assisted positioning method with AI/ML models deployed on the gNB side.
Case 3b: An NG-RAN node assisted positioning method with AI/ML models deployed on the LMF side.

In the aforementioned possible cases, the following observations have been made through simulation in Rel-18.

Observation 1. When the network synchronization error during AI/ML model training differs from that during testing, the positioning estimation accuracy of the AI/ML model significantly decreases.

Observation 2. When the UE timing error during AI/ML model training differs from that during testing, the positioning estimation accuracy of the AI/ML model significantly decreases.

Observation 3. When the signal-to-noise ratio (SNR) value during AI/ML model training differs from that during testing, the positioning estimation accuracy of the AI/ML model significantly decreases.

Observation 4. When the channel estimation error during AI/ML model training differs from that during testing, the positioning estimation accuracy of the AI/ML model significantly decreases.

Based on some observations obtained through simulation in Rel-18 mentioned above, in the embodiments of the present disclosure, the network synchronization errors and the like may be collectively referred to as interference factors/non-ideal factors (not limited to the few items observed in the simulation). Therefore, the aforementioned interference factors/non-ideal factors may have a significant impact on the accuracy of positioning. The solutions presented in the following embodiments of the present disclosure can mitigate the impact of interference factors/non-ideal factors and ensure the accuracy of positioning.

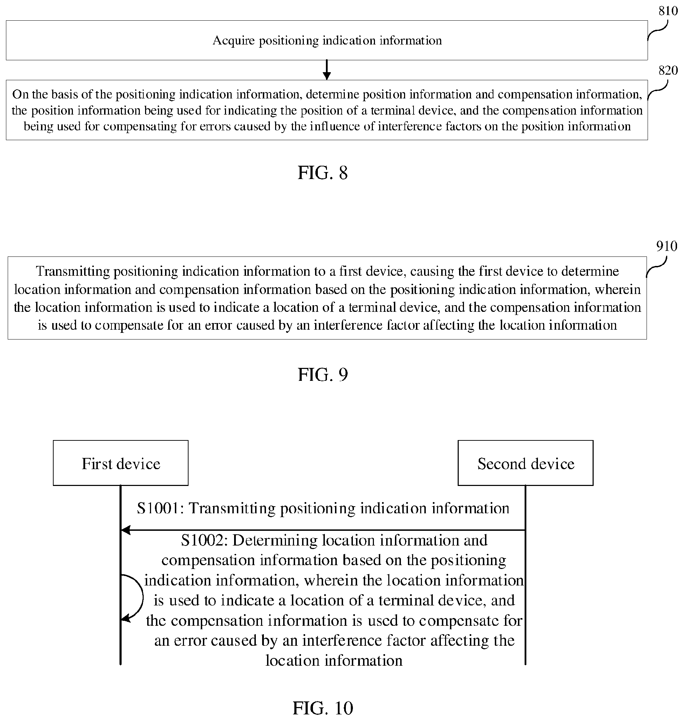

Referring to FIG. 8, it is a flowchart of a positioning method according to an embodiment of the present disclosure. This method may be performed by a first device, wherein the first device may be the terminal device 120 or the terminal device 130 in the network architecture shown in FIG. 1, or alternatively, the first device may also be the network device 110 in the network architecture shown in FIG. 1. This method may include the following steps.

Step 810, acquiring positioning indication information.

The positioning indication information may be transmitted to the first device by a second device, or alternatively, the positioning indication information may also be determined autonomously by the second device.

Among them, the first device may be a terminal device, and the second device may be a network device.

Alternatively, the first device may be a network device, and the second device may be a terminal device.

Step 820, determining location information and compensation information based on the positioning indication information, wherein the location information is used to indicate a location of a terminal device, and the compensation information is used to compensate for an error caused by an interference factor affecting the location information.

In summary, the solution according to the embodiments of the present disclosure allows the first device to obtain, based on the positioning indication information, the location information indicating the location of the terminal device and the compensation information used to compensate for the error caused by the interference factor affecting the location information. In the above solution, based on the positioning indication information, not only can the location information be obtained, but also the compensation information for compensating for the positioning error caused by the interference factor can be obtained. Therefore, the positioning result can be corrected using the compensation information to reduce the impact of the interference factor on the positioning result, thereby improving the accuracy of positioning.

Referring to FIG. 9, it is a flowchart of a positioning method according to an embodiment of the present disclosure. This method may be performed by a network device, wherein the network device may be the network device 110 in the network architecture shown in FIG. 1. The method may include the following steps.

Step 910, transmitting positioning indication information to a first device, causing the first device to determine location information and compensation information based on the positioning indication information, wherein the location information is used to indicate a location of a terminal device, and the compensation information is used to compensate for an error caused by an interference factor affecting the location information.

In summary, according to the solution presented in the embodiments of the present disclosure, the second device can provide positioning indication information to the first device. The first device can obtain, based on the positioning indication information, the location information indicating the location of the terminal device and the compensation information used to compensate for the error caused by the interference factor affecting the location information. In the above solution, based on the positioning indication information, not only can the location information be obtained, but also the compensation information for compensating for the positioning error caused by the interference factor can be obtained. Therefore, the positioning result can be corrected using the compensation information to reduce the impact of the interference factor on the positioning result, thereby improving the accuracy of positioning.

Based on the embodiments shown in FIG. 8 and/or FIG. 9, reference may be made to FIG. 10, which is a flowchart of a positioning method according to an embodiment of the present disclosure. This method may be performed via interaction between a first device and a second device. The first device may be the terminal device 120 or the terminal device 130 in the network architecture shown in FIG. 1, and the second device may be the network device 110 in the network architecture shown in FIG. 1. This method may include the following steps.

In step 1001, the second device transmits positioning indication information to the first device, and correspondingly, the first device receives the positioning indication information.

In some embodiments, the second device may be a network device, and the first device may be a terminal device.

The positioning indication information may include first information and/or second information.

In step 1002, the first device determines location information and compensation information based on the positioning indication information, wherein the location information is used to indicate a location of a terminal device, and the compensation information is used to compensate for an error caused by an interference factor affecting the location information.

In some scenarios, the interference factor may also be referred to as a non-ideal factor.

In some embodiments, the compensation information is used to:
compensate for a location output by a first positioning model; or
compensate for an intermediate result output by the first positioning model, wherein the intermediate result is used for location determination; or
compensate for a measurement error; or
compensate for a measured value of the interference factor.

For example, the first device may determine the first positioning model based on the first information, and determine the location information based on the first positioning model. Another example is that the first device may determine the compensation information based on the second information.

In some embodiments, the positioning indication information includes the first information, which is used to indicate the first positioning model. For instance, the first information may be transmitted to the first device by an LMF or a TRP (i.e., the aforementioned second device).

Alternatively, the first information may also be determined by the first device based on preset conditions.

In some embodiments, the first information may include information of a first positioning model (also referred to as a first AI/ML model). This first AI/ML model may be a neural network model used for positioning. The information of this first AI/ML model may be indicated to the first device by the LMF or the TRP, or alternatively, the first AI/ML model may be determined autonomously by the terminal device.

In some embodiments, the positioning indication information includes the second information, which includes one or more of: compensation model information, or configuration information of a second reference signal. The compensation model information is used to indicate a compensation model, and this compensation model is used to acquire the aforementioned compensation information. The second reference signal is different from a first reference signal, and the first reference signal is a reference signal used for positioning by the first positioning model.

For example, the compensation model information may include an identification of the compensation model or a model parameter of the compensation model.

In the embodiments of the present disclosure, the second reference signal is different from the first reference signal, wherein the first reference signal may be used for positioning by the first AI/ML model.

In some embodiments, the aforementioned compensation information is used to compensate for the error caused by the interference factor affecting the first positioning model.

In a case where the compensation information is determined by the first device based on the second reference signal, the aforementioned second information may include the configuration information of the second reference signal.

Alternatively, in a case where the compensation information is determined based on the compensation model, the aforementioned second information may include the compensation model, or the compensation model information (such as the number or name of the compensation model or other identification information). Among them, the compensation model information or the compensation model mentioned above may be indicated to the terminal device by the LMF or the TRP, or it may be determined autonomously by the terminal device.

In the embodiments of the present disclosure, the first device determines the compensation information based on the second information, which can mitigate the impact of the interference factor and improve the accuracy of positioning.

In some embodiments, the aforementioned interference factor may include one or more of:
a network synchronization error;
a timing error;
a transmit power level;
an SNR;
a signal-to-interference-plus-noise ratio (SINR); or
a channel estimation error.

In the embodiments of the present disclosure, the interference factor affecting the accuracy of positioning may include one or more of the following errors.
1) Network synchronization error. The network synchronization error may be understood as each TRP/gNB having the same synchronization error for each terminal device served by the TRP/gNB. The synchronization errors between different TRPs may be the same or different. The network synchronization error corresponding to the data in the training set of the first AI/ML model is different from the network synchronization error corresponding to the data in the test set of the first AI/ML model, or the difference therebetween exceeds a first threshold.
2) Timing error of the terminal device. The timing error of the terminal device may be understood as each terminal device having the same timing error for each TRP. The timing errors between different terminal devices may be different. The timing error of the terminal device corresponding to the data in the training set of the first AI/ML model is different from the timing error of the terminal device corresponding to the data in the test set of the first AI/ML model, or the difference therebetween exceeds a second threshold.
3) Transmit power level. The transmit power level of the terminal device corresponding to the data in the training set of the first AI/ML model is different from the transmit power level of the terminal device corresponding to the data in the test set of the first AI/ML model, or the difference therebetween exceeds a third threshold. Alternatively, the transmit power level of the network device corresponding to the data in the training set of the first AI/ML model is different from the transmit power level of the network device corresponding to the data in the test set of the first AI/ML model, or the difference therebetween exceeds a third threshold.
4) SNR. The SNR corresponding to the data in the training set of the first AI/ML model is different from the SNR corresponding to the data in the test set of the first AI/ML model, or the difference therebetween exceeds a fourth threshold.
5) SINR. The SINR corresponding to the data in the training set of the first AI/ML model is different from the SINR corresponding to the data in the test set of the first AI/ML model, or the difference therebetween exceeds a fifth threshold.
6) Channel estimation error. The channel estimation error includes an estimation error of channel impulse response (CIR), an estimation error power of delay profile (PDP), or an estimation error of delay profile (DP), among others.

In some embodiments, the first positioning model is associated with a value of the interference factor; and/or, the first positioning model is associated with a value range of the interference factor.

For example, in the embodiments of the present disclosure, the association between the first AI/ML model and the interference factor includes one or more of the following:
1) A value of the interference factor applicable to the first AI/ML model. For example, the network synchronization error applicable to the first AI/ML model is *q* nanoseconds.
2) A value range of the interference factor applicable to the first AI/ML model. For example, the network synchronization error applicable to the first AI/ML model ranges from *q* to *p* nanoseconds.

In some embodiments, the aforementioned positioning indication information is indicated by a network device.

In some embodiments, the aforementioned positioning indication information is carried or configured by one or more of the following:
the aforementioned positioning indication information is carried in a positioning assistance data information element (IE);
the aforementioned positioning indication information is carried in a position system information block (posSIB);
the aforementioned positioning indication information is configured via radio resource control (RRC) signaling.

In the embodiments of the present disclosure, in a case where the first information and/or the second information is transmitted to the terminal device by the LMF or the TRP, the LMF or the TRP may transmit the first information and/or the second information in the following ways:
1) The first information and/or the second information is carried in a positioning assistance data IE. It can be understood that the first information may be acquired from a positioning assistance data IE (e.g., ProvideAssistanceData IE). That is, the network device may transmit the first information and/or the second information to the first device via unicast.
2) The first information and/or the second information is carried in a posSIB. It can be understood that the first information and/or the second information may be acquired from the posSIB. That is, the network device may transmit the first information and/or the second information to the first device via broadcast.
3) The first information and/or the second information is configured via RRC signaling.

In the solution presented in the embodiments of the present disclosure, the first information and/or the second information may be configured by the LMF or the TRP, with no limitation on the configuration method, thus enhancing the flexibility of configuration.

In some embodiments, the second reference signal may include one or more of: a PRS, an SRS, a channel state information-reference signal (CSI-RS), or a synchronization signal and physical broadcast channel (PBCH) block (SSB).

In the embodiments of the present disclosure, in a case where the compensation information is determined based on the second reference signal, the second information may include the configuration information of the second reference signal, and the second reference signal is used to acquire the compensation information.

The second reference signal may be any one or more of: a PRS, an SRS, a CSI-RS, or an SSB.

In some embodiments, different interference factors correspond to different second reference signals.

For instance, different interference factors may correspond to different types of second reference signals. For example, the type of second reference signal corresponding to the network synchronization error may be the SSB or the CSI-RS. Another example is that the type of second reference signal corresponding to the power level may be the SRS or the CSI-RS. Furthermore, the type of second reference signal corresponding to the timing error of the terminal device may be the SRS, and so on. The second reference signal is a dedicated reference signal for acquiring the compensation information, and the type of reference signal may vary depending on the content that needs to be compensated.

In some embodiments, a configuration of time-frequency resources for the second reference signal is associated with an application duration of the first positioning model.

For instance, the configuration of the time-frequency resources for the second reference signal is associated with the application duration of the first AI/ML model. For example, a time period corresponding to the time-frequency resources of the second reference signal precedes a time period corresponding to the application duration of the first AI/ML model, and an end time point of the time period corresponding to the time-frequency resources of the second reference signal is spaced apart from a start time point of the application duration of the first AI/ML model by a specified duration, such as a specified number of time slots or symbols.

In the solution presented in the embodiments of the present disclosure, in a case where the output of the first AI/ML model is a location of the terminal device, the compensation information may be directly used to compensate the location. For example, the final location may be obtained by applying the compensation information to the location coordinates output by the first AI/ML model.

Alternatively, in a case where the output of the first AI/ML model is an intermediate result corresponding to the location of the terminal device, the compensation information may be used to make a compensation based on the intermediate result. For instance, the final intermediate result may be obtained by incorporating the compensation information into the intermediate result output by the first AI/ML model.

Alternatively, the compensation information may correspond to compensating for a measured value of the interference factor. For example, in a case where the interference factor is the network synchronization error, the network synchronization error is estimated based on the second reference signal, and the compensation information may be utilized to mitigate the impact of the network synchronization error on positioning accuracy.

The solution presented in the aforementioned embodiments of the present disclosure utilizes the dedicated reference signal to measure and obtain the compensation information, eliminating the need for assistance from other neural network models and achieving greater simplicity.

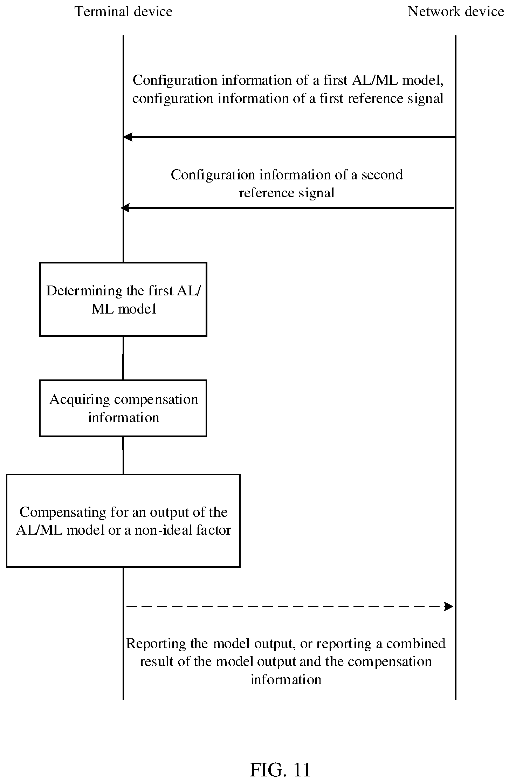

Referring to FIG. 11, it is a schematic diagram of a method for positioning compensation based on a second reference signal involved in the present disclosure.

In other embodiments of the present disclosure, the aforementioned compensation information is determined based on the compensation model. In this case, the second information may include the compensation model information, or alternatively, the second information may include both the compensation model information and the configuration information of the second reference signal.

The compensation model may be used to compensate for one or multiple items of the following information: position error compensation information, intermediate result error compensation information, measurement error compensation information, or interference factor error compensation information. In other words, based on the information from this compensation model, compensation may be performed on positioning result errors, intermediate result errors, measurement errors, and so on.

In some embodiments, in a case where step 1002 is performed by a terminal device (i.e., the first device is a terminal device), the compensation model is trained by the terminal device, or alternatively, the compensation model is trained by a network device and then indicated to the terminal device.

In some embodiments, a training dataset of the compensation model is the same as that of the first positioning model, or alternatively, a training dataset for the compensation model is different from that of the first positioning model.

The compensation model and the first AI/ML model may be trained using the same dataset or different datasets, which is not limited by the present disclosure.

In some embodiments, the input of the compensation model includes one or more of the following:
a measured value of the interference factor, or a measured value calculated based on configuration information of a reference signal.

The input of the compensation model may be the measured value of the interference factor, or the measured value calculated based on the configuration information of the reference signal (such as CIR, PDP, DP, reference signal receiving power (RSRP), etc.). The output of the compensation model may be a compensation value for the location of the terminal device, a compensation value for the intermediate result, or a compensation value for the measurement result. The compensation model is used to process the input measured values and output compensation values (i.e., the aforementioned compensation information).

Among them, the accuracy of acquiring compensation information using a compensation model may be higher than the accuracy of acquiring compensation information using a second reference signal.

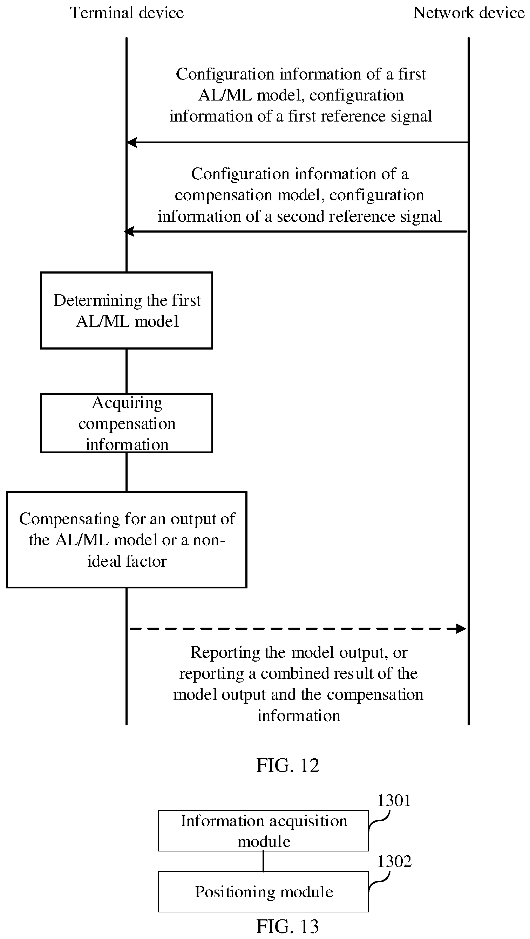

Referring to FIG. 12, it is a schematic diagram of a method for positioning compensation based on a compensation model involved in the present disclosure.

In some embodiments, the method further includes:
receiving third information, wherein the third information is used to indicate whether to transmit reporting information to the network device. The reporting information includes one or more of the following:
a location result or the compensation information.

In some embodiments, in a case where the third information indicates transmitting the reporting information to the network device, the reporting information is associated with one or more of: a PRS resource, an SRS resource, a measurement timestamp, or a timestamp corresponding to the compensation information.

In FIGS. 11 and 12, the step of reporting by the terminal device is optional. In this regard, the terminal device may receive the third information, which is used to indicate any of the following:
whether the terminal device report a model output (such as the aforementioned location information);
whether to report a combined result of the model output and the compensation information; or
whether to report the compensation information.

The information reported by the terminal device to the LMF may include one or more of the following:
the measurement value of the interference factor, the compensation information, the location of the terminal device or a combined result of the location of the terminal device and the compensation information (corresponding to the case where the compensation information is used to compensate for the location of the terminal device), the intermediate result corresponding to the location of the terminal device or a combined result of the intermediate result corresponding to the location of the terminal device and the compensation information (corresponding to the case where the compensation information is used to compensate for the intermediate result corresponding to the location of the terminal device), or the timestamp corresponding to the compensation information.

For example, in some embodiments, the aforementioned information reported by the terminal device to the LMF may include the last five items in Table 1 below.

**Table 1**

| Information | UE-assisted | UE-based |
|---|---|---|
| Latitude/Longitude/Altitude, together with uncertainty shape | No | Yes |
| PCI, GCI, ARFCN, PRS resource ID, PRS resource set ID and PRS ID for each measurement | Yes | No |
| DL RSTD measurement | Yes | No |
| DL-PRS-RSRP measurement | Yes | No |
| Time stamp of the measurements | Yes | No |
| Time stamp of location estimate | No | Yes |
| Quality for each measurement | Yes | No |
| UE Rx TEG IDs for DL RSTD measurements | Yes | No |
| DL-PRS-RSRPP measurement | Yes | No |
| LOS/NLOS information for UE measurements | Yes | No |
| Measured values of interference factors | Yes | Yes |
| Compensation information | Yes | Yes |
| Location of the terminal device (or a combined result of the location of the terminal device with the compensation information) | No | Yes |
| Intermediate result corresponding to the location of the terminal device (or a combined result of the intermediate result corresponding to the location of the terminal device with the compensation information) | Yes | No |
| Timestamp corresponding to the compensation information | Yes | Yes |

The reporting of newly added information may be associated with one or more of: a PRS resource, an SRS resource, a measurement timestamp, or a timestamp corresponding to compensation information.

In the aforementioned scheme, the third information is used to indicate whether to report the newly added information. For instance, in some scenarios, all information is reported, while in other scenarios, only partial information needs to be reported, which can reduce the reporting overhead.

In some embodiments, the method further includes:
acquiring, by the first device, a first value of the interference factor, wherein the first value represents the current value of the interference factor.

In this case, the first device determines the location information and the compensation information based on the positioning indication information, including:
determining, by the first device, the location information and the compensation information based on the positioning indication information in a case where the first value matches the first positioning model.

Taking the first device being a terminal device as an example, in the embodiments of the present disclosure, in a case where a difference between the current value of the interference factor and an interference factor value corresponding to the first positioning model is relatively small (such as less than a first difference value), it may be determined that the first value matches the first positioning model. In this case, the location information and the compensation information may be determined based on the positioning indication information, to acquire an accurate positioning result based on the compensation information.

In some embodiments, the method further includes:
performing, by the first device, an adjustment operation in a case where the first value mismatches the first positioning model.

The adjustment operation includes:
fine-tuning parameters of the first positioning model; or
switching to a second positioning model corresponding to the value of the interference factor; or
falling back to a conventional positioning method.

Optionally, in a case where the difference between the current value of the interference factor and the interference factor value corresponding to the first positioning model is relatively large (for example, not less than a first difference value), it may be determined that the first value mismatches the first positioning model. In this case, instead of using the compensation information for positioning compensation, the parameters of the first positioning model are fine-tuned (for example, the first positioning model is retrained), or another positioning model corresponding to the current value of the interference factor is used for determining the location information, or a conventional positioning method is used for positioning, etc.

In some embodiments, performing the adjustment operation in the case where the first value mismatches the first positioning model includes:
acquiring a difference between the first value and a second value of the interference factor, wherein the second value corresponds to the first positioning model;
fine-tuning the parameters of the first positioning model in a case where the difference is between a first difference value and a second difference value, wherein the first difference value is less than the second difference value;
switching to the second positioning model that matches the value of the interference factor in a case where the difference is between the second difference value and a third difference value, wherein the second difference value is less than the third difference value;
falling back to the conventional positioning method in a case where the difference is greater than the third difference value.

For example, in an embodiment, the process of positioning by the first device may include the following steps:
In step 1, the first device determines the first information and, based on this information, determines the location information.

Among them, the first AI/ML model is associated with the interference factor, wherein the association between the first AI/ML model and the interference factor includes one or more of the following:
1) The value of the interference factor applicable to the first AI/ML model. For example, the network synchronization error applicable to the first AI/ML model is *q* nanoseconds. For instance, the SNR applicable to the first AI/ML model is *h* dB.
2) The value range of the interference factor applicable to the first AI/ML model. For example, the network synchronization error applicable to the first AI/ML model ranges from *q* to *p* nanoseconds. For instance, the SNR applicable to the first AI/ML model ranges from *h* to *k* dB.
3) The information of the first AI/ML model carries the aforementioned information. The functionality of the first AI/ML model carries the aforementioned information, or an index of the first AI/ML model is associated with the aforementioned information.

In step 2, the first device determines the interference factor in the current actual environment by measurement. In a case where the measured value of the interference factor is different from/mismatches the value of the interference factor applicable to the first AI/ML model, or in a case where the measured value of the interference factor is inconsistent with/mismatches the value range of the interference factor applicable to the first AI/ML model, or in a case where the difference between the measured value of the interference factor and the value of the interference factor applicable to the first AI/ML model exceeds a threshold, the following operations may be performed:
1) The first method: Acquiring the compensation information using the method introduced in step 1002, which is not elaborated here. In this case, no model adjustment is required, and the applicability of the AI/ML model is stronger.
2) The second method: Triggering model fine-tuning.

Specifically, in a case where the difference between the measured value of the interference factor and the value of the interference factor applicable to the first AI/ML model exceeds the first difference value but is less than the second difference value, model fine-tuning is triggered.

In some embodiments, the amount of training data used for fine-tuning the parameters of the first positioning model is associated with the aforementioned difference; or alternatively, the amount of training data used for fine-tuning the parameters of the first positioning model is associated with the first value.

For example, the amount of training data used for fine-tuning the parameters of the first positioning model is associated with a numerical interval where the aforementioned difference lies. For instance, an interval between the first difference value and the second difference value may be divided into a plurality of numerical intervals, with each numerical interval corresponding to a specific amount of data. When fine-tuning the parameters of the first positioning model, the corresponding amount of data may be determined based on the numerical interval where the aforementioned difference lies, and the training data of the corresponding amount may be used to retrain the first positioning model, thereby achieving fine-tuning of the parameters of the first positioning model.

For another example, the amount of training data used for fine-tuning the parameters of the first positioning model is associated with a numerical interval where the first value lies. For instance, each numerical interval corresponds to a specific amount of data. When fine-tuning the parameters of the first positioning model, the corresponding amount of data may be determined based on the numerical interval where the first value lies, and the training data of the corresponding amount may be used to retrain the first positioning model, thereby achieving fine-tuning of the parameters of the first positioning model.

In some embodiments, the amount of data required for model fine-tuning is related to the measured value of the interference factor. For instance, if *n* intervals are divided between the first difference value and the second difference value, the measured value of the interference factor falls within different intervals results in different amounts of data required for model fine-tuning. For example, the different amounts of data required for model fine-tuning may be defined as different percentages of the training set size, or as different numerical values. In cases where the difference is small, the performance of the first AI/ML model may decline. However, through fine-tuning with a small amount of data, the model performance can be significantly improved, thereby increasing the cost of positioning accuracy while maintaining a low complexity for model fine-tuning.

### 3) The third method: Triggering model switching.

Specifically, in a case where the difference between the measured value of the interference factor and the value of the interference factor applicable to the first AI/ML model exceeds the second difference value but is less than the third difference value, model switching is triggered. The model after switch is applicable to the scenario of the measured interference factor, ensuring positioning accuracy.

When the difference is too large, the positioning accuracy of the first AI/ML model is already very low, and the sample size required for model fine-tuning is very large, which increases the complexity of model fine-tuning. Therefore, it is better to directly switch to an appropriate model.

### 4) The fourth method: Model fallback, e.g., falling back to a conventional positioning method.

In cases where the difference is too large, for instance, the difference between the measured value of the interference factor and the value of the interference factor applicable to the first AI/ML model exceeds the third difference value, the performance of positioning using the AI/ML model may be comparable to or inferior to conventional positioning methods. Therefore, reverting to or falling back to conventional positioning methods can ensure positioning accuracy.

Referring to FIG. 13, it is a block diagram of a positioning apparatus according to an embodiment of the present disclosure. The positioning apparatus is capable of implementing the functions executed by the first device in any of the methods shown in FIGS. 8 to 10. As shown in FIG. 13, the apparatus may include:
an information acquisition module 1301, configured to acquire positioning indication information; and
a positioning module 1302, configured to determine location information and compensation information based on the positioning indication information;
wherein the location information is used to indicate a location of a terminal device, and the compensation information is used to compensate for an error caused by an interference factor affecting the location information.

In some embodiments, the positioning indication information includes first information, wherein the first information is used to indicate a first positioning model; and the compensation information is used to compensate for the error caused by the interference factor affecting the first positioning model.

In some embodiments, the positioning indication information includes second information, wherein the second information includes at least one of:
compensation model information, or configuration information of a second reference signal;
wherein the compensation model information is used to indicate a compensation model, the compensation model being used to acquire the compensation information; and the second reference signal is different from a first reference signal, the first reference signal being used for positioning by a first positioning model.

In some embodiments, in a case where the second information includes the configuration information of the second reference signal, the compensation information is determined based on the second reference signal; and/or
in a case where the second information includes the compensation model information, the compensation information is determined based on the compensation model.

In some embodiments, the second reference signal may include at least one of:
a PRS, an SRS, a CSI-RS, or an SSB.

In some embodiments, different interference factors correspond to different second reference signals.

In some embodiments, a configuration of time-frequency resources of the second reference signal is associated with an application duration of the first positioning model.

In some embodiments, the first device is the terminal device, and the compensation model is trained by the terminal device, or alternatively, the compensation model is trained and indicated to the terminal device by a network device.

In some embodiments, a training dataset of the compensation model is the same as, or different from, a training dataset of the first positioning model.

In some embodiments, an input of the compensation model includes at least one of:
a measured value of the interference factor, or a measured value calculated based on configuration information of a reference signal.

In some embodiments, the compensation information is used to:
compensate for a location output by the first positioning model; or
compensate for an intermediate result output by the first positioning model, wherein the intermediate result is used for location determination; or
compensate for a measurement error; or
compensate for a measured value of the interference factor.

In some embodiments, the interference factor includes at least one of:
a network synchronization error;
a timing error;
a transmit power level;
an SNR;
an SINR; or
a channel estimation error.

In some embodiments, the first positioning model is associated with a value of the interference factor; and/or, the first positioning model is associated with a value range of the interference factor.

In some embodiments, the positioning indication information is indicated by a network device.

In some embodiments, the positioning indication information is carried or configured by at least one of:
being carried in a positioning assistance data IE;
being carried in a posSIB; or
being configured via RRC signaling.

In some embodiments, the apparatus further includes:
a receiving module, configured to receive third information, wherein the third information is used to indicate whether to transmit reporting information to a network device, and the reporting information includes at least one of:
a location result, or the compensation information.

In some embodiments, in a case where the third information indicates transmitting the reporting information to the network device, the reporting information is associated with at least one of: a PRS resource, an SRS resource, a measurement timestamp, or a timestamp corresponding to the compensation information.

In some embodiments, the apparatus further includes:
a value acquisition module, configured to acquire a first value of the interference factor, the first value being a current value of the interference factor;
wherein the positioning module is configured to determine the location information and the compensation information based on the positioning indication information in a case where the first value matches the first positioning model.

In some embodiments, the apparatus further includes:
an adjustment module, configured to perform an adjustment operation in a case where the first value mismatches the first positioning model;
wherein the adjustment operation includes one of:
   fine-tuning parameters of the first positioning model;
   switching to a second positioning model that matches a value of the interference factor; or
   falling back to a conventional positioning method.

In some embodiments, the adjustment module is configured to:
acquire a difference between the first value and a second value of the interference factor, wherein the second value matches the first positioning model; and
in a case where the difference is between a first difference value and a second difference value, fine-tune the parameters of the first positioning model, wherein the first difference value is less than the second difference value;
in a case where the difference is between the second difference value and a third difference value, switch to the second positioning model that matches the value of the interference factor, wherein the second difference value is less than the third difference value; or
in a case where the difference is greater than the third difference value, fall back to the conventional positioning method.

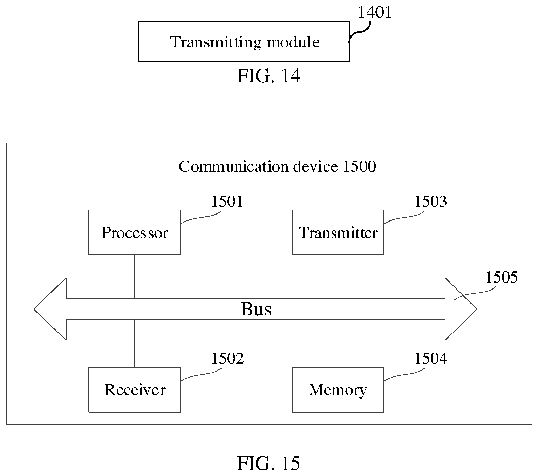

Referring to FIG. 14, it is a block diagram of a positioning apparatus according to an embodiment of the present disclosure. The positioning apparatus is capable of implementing functions executed by the second device in any of the methods shown in FIGS. 8 to 10. As shown in FIG. 14, the apparatus may include:
a transmitting module 1401, configured to transmit positioning indication information to a first device, causing the first device to determine location information and compensation information based on the positioning indication information;
wherein the location information is used to indicate a location of a terminal device, and the compensation information is used to compensate for an error caused by an interference factor affecting the location information.

In some embodiments, the positioning indication information includes first information, wherein the first information is used to indicate a first positioning model; and the compensation information is used to compensate for the error caused by the interference factor affecting the first positioning model.

In some embodiments, the positioning indication information includes second information, wherein the second information includes at least one of:
compensation model information, or configuration information of a second reference signal;
wherein the compensation model information is used to indicate a compensation model, the compensation model being used to acquire the compensation information; and the second reference signal is different from a first reference signal, the first reference signal being used for positioning by a first positioning model.

In some embodiments, in a case where the second information includes the configuration information of the second reference signal, the compensation information is determined based on the second reference signal; and/or
in a case where the second information includes the compensation model information, the compensation information is determined based on the compensation model.

In some embodiments, the second reference signal includes at least one of:
a PRS, an SRS, a CSI-RS, or an SSB.

In some embodiments, different interference factors correspond to different second reference signals.

In some embodiments, a configuration of time-frequency resources of the second reference signal is associated with an application duration of the first positioning model.

In some embodiments, in a case where the first device is the terminal device, the compensation model is trained by the terminal device, or alternatively, the compensation model is trained and indicated to the terminal device by a network device.

In some embodiments, a training dataset of the compensation model is the same as, or different from, a training dataset of the first positioning model.

In some embodiments, an input of the compensation model includes at least one of:
a measured value of the interference factor, or a measured value calculated based on configuration information of a reference signal.

In some embodiments, the compensation information is used to:
compensate for a location output by the first positioning model; or
compensate for an intermediate result output by the first positioning model, wherein the intermediate result is used for location determination; or
compensate for a measurement error; or
compensate for a measured value of the interference factor.

In some embodiments, the interference factor includes at least one of:
a network synchronization error;
a timing error;
a transmit power level;
an SNR;
an SINR; or
a channel estimation error.

In some embodiments, the first positioning model is associated with a value of the interference factor; and/or
the first positioning model is associated with a value range of the interference factor.

In some embodiments, the positioning indication information is carried or configured by at least one of:
being carried in a positioning assistance data IE;
being carried in a posSIB; or
being configured via RRC signaling.

In some embodiments, the transmitting module is further configured to transmit third information to the first device, wherein the third information is used to indicate whether to transmit reporting information to a network device, and the reporting information includes at least one of:
a location result, or the compensation information.

In some embodiments, in a case where the third information indicates transmitting the reporting information to the network device, the reporting information is associated with at least one of:
a PRS resource, an SRS resource, a measurement timestamp, or a timestamp corresponding to the compensation information.

It should be noted that when the apparatus according to the above embodiments implements its functions, the description is only exemplified based on the division of the above functional modules. In practical applications, the above functions may be allocated to different functional modules according to actual needs, that is, the content structure of the apparatus may be divided into different functional modules to complete all or part of the functions described above.

Regarding the apparatus in the above embodiments, the specific ways in which each module performs operations have been described in detail in the embodiments related to the method, and are not elaborated on here.

Referring to FIG. 15, it is a structural schematic diagram of a communication device 1500 according to an embodiment of the present disclosure. The communication device 1500 may include: a processor 1501, a receiver 1502, a transmitter 1503, a memory 1504, and a bus 1505.

The processor 1501 includes one or more processing cores, and it executes various functional applications and information processing by running software programs and modules.

The receiver 1502 and the transmitter 1503 may be implemented as a communication component, which may be a communication chip. This communication chip may also be referred to as a transceiver. The memory 1504 is connected to the processor 1501 via the bus 1505. The memory 1504 may be used to store computer programs, and the processor 1501 is used to execute these computer programs to perform the various steps in the above method embodiments.

In addition, the memory 1504 may be implemented by any type of volatile or non-volatile storage device, or a combination thereof. Volatile or non-volatile storage devices include, but are not limited to: magnetic or optical disks, electrically erasable programmable read-only memory (EEPROM), erasable programmable read-only memory (EPROM), static random access memory (SRAM), read-only memory (ROM), magnetic memory, flash memory, and programmable read-only memory (PROM).

In an exemplary embodiment, in a case where the communication device 1500 is implemented as the first device, the computer program is executed by the receiver 1502 and the processor 1501, causing the communication device to perform the steps performed by the first device in any of the methods shown in FIGS. 8 to 10.

In an exemplary embodiment, in a case where the communication device 1500 is implemented as the second device, the computer program is executed by the transmitter 1503 and processor 1501, causing the communication device to perform the steps performed by the second device in any of the methods shown in FIGS. 8 to 10.

The embodiments of the present disclosure further provide a computer-readable storage medium, in which a computer program is stored. The computer program, when loaded and executed by a processor, causes the processor to perform the steps performed by the first device or the second device in any of the methods shown in FIGS. 8 to 10.

The present disclosure also provides a chip, which includes an integrated circuit and firmware arranged in the integrated circuit. The chip, when running in a communication device, causes the communication device to perform the steps performed by the first device or the second device in any of the methods shown in FIGS. 8 to 10.

The present disclosure also provides a computer program product. The computer program product or the computer program includes one or more computer instructions stored in a computer-readable storage medium. The one or more computer instructions, when read from the computer-readable storage medium and executed by a processor of a communication device, cause the communication device to perform the steps performed by the first device or the second device in any of the methods shown in FIGS. 8 to 10.

The present disclosure also provides a computer program that, when executed by a processor of a communication device, causes the communication device to perform the steps performed by the first device or the second device in the method shown in any of FIGS. 8 to 10.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A positioning method, performed by a first device, the method comprising:
acquiring positioning indication information;
determining location information and compensation information based on the positioning indication information;
wherein the location information is used to indicate a location of a terminal device, and the compensation information is used to compensate for an error caused by an interference factor affecting the location information.

2. The method according to claim 1, wherein
the positioning indication information comprises first information, wherein the first information is used to indicate a first positioning model; and
the compensation information is used to compensate for the error caused by the interference factor affecting the first positioning model.

3. The method according to claim 1 or 2, wherein
the positioning indication information comprises second information, wherein the second information comprises at least one of:
compensation model information, or configuration information of a second reference signal;
wherein the compensation model information is used to indicate a compensation model, the compensation model being used to acquire the compensation information; and the second reference signal is different from a first reference signal, the first reference signal being used for positioning by a first positioning model.

4. The method according to claim 3, wherein
in a case where the second information comprises the configuration information of the second reference signal, the compensation information is determined based on the second reference signal; and/or
in a case where the second information comprises the compensation model information, the compensation information is determined based on the compensation model.

5. The method according to claim 3 or 4, wherein the second reference signal comprises at least one of:
a positioning reference signal (PRS), a sounding reference signal (SRS), a channel state information-reference signal (CSI-RS), or a synchronization signal and physical broadcast channel (PBCH) block (SSB).

6. The method according to claim 5, wherein different interference factors correspond to different second reference signals.

7. The method according to claim 5 or 6, wherein a configuration of time-frequency resources of the second reference signal is associated with an application duration of the first positioning model.

8. The method according to any one of claims 3 to 7, wherein the first device is the terminal device, and
the compensation model is trained by the terminal device, or
the compensation model is trained and indicated to the terminal device by a network device.

9. The method according to claim 8, wherein a training dataset of the compensation model is the same as, or different from, a training dataset of the first positioning model.

10. The method according to any one of claims 3 to 9, wherein an input of the compensation model comprises at least one of:
a measured value of the interference factor, or a measured value calculated based on configuration information of a reference signal.

11. The method according to any one of claims 3 to 10, wherein the compensation information is used to compensate for one of:
a location output by the first positioning model;
an intermediate result output by the first positioning model, wherein the intermediate result is used for location determination;
a measurement error; or
a measured value of the interference factor.

12. The method according to any one of claims 1 to 11, wherein the interference factor comprises at least one of:
a network synchronization error;
a timing error;
a transmit power level;
a signal-to-noise ratio (SNR);
a signal-to-interference-plus-noise ratio (SINR); or
a channel estimation error.

13. The method according to any one of claims 2 to 12, wherein the first positioning model is associated with at least one of:
a value of the interference factor, or
a value range of the interference factor.

14. The method according to any one of claims 3 to 13, wherein the positioning indication information is indicated by a network device.

15. The method according to claim 14, wherein the positioning indication information is carried or configured by at least one of:
being carried in a positioning assistance data information element (IE);
being carried in a position system information block (posSIB); or
being configured via radio resource control (RRC) signaling.

16. The method according to any one of claims 2 to 15, further comprising:
receiving third information, wherein the third information is used to indicate whether to transmit reporting information to a network device, and the reporting information comprises at least one of:
a location result, or the compensation information.

17. The method according to claim 16, wherein in a case where the third information indicates transmitting the reporting information to the network device, the reporting information is associated with at least one of:
a positioning reference signal (PRS) resource, a sounding reference signal (SRS) resource, a measurement timestamp, or a timestamp corresponding to the compensation information.

18. The method according to any one of claims 2 to 11 and 13 to 17, further comprising:
acquiring a first value of the interference factor, the first value being a current value of the interference factor;
wherein determining the location information and the compensation information based on the positioning indication information comprises:
in a case where the first value matches the first positioning model, determining the location information and the compensation information based on the positioning indication information.

19. The method according to claim 18, further comprising:
in a case where the first value mismatches the first positioning model, performing an adjustment operation;
wherein the adjustment operation comprises one of:
fine-tuning parameters of the first positioning model;
switching to a second positioning model that matches a value of the interference factor; or
falling back to a conventional positioning method.

20. The method according to claim 19, wherein in the case where the first value mismatches the first positioning model, performing the adjustment operation comprises:
acquiring a difference between the first value and a second value of the interference factor, wherein the second value matches the first positioning model; and
in a case where the difference is between a first difference value and a second difference value, fine-tuning the parameters of the first positioning model, wherein the first difference value is less than the second difference value;
in a case where the difference is between the second difference value and a third difference value, switching to the second positioning model that matches the value of the interference factor, wherein the second difference value is less than the third difference value; or
in a case where the difference is greater than the third difference value, falling back to the conventional positioning method.

21. A positioning method, performed by a second device, the method comprising:
transmitting positioning indication information to a first device, causing the first device to determine location information and compensation information based on the positioning indication information;
wherein the location information is used to indicate a location of a terminal device, and the compensation information is used to compensate for an error caused by an interference factor affecting the location information.

22. The method according to claim 21, wherein
the positioning indication information comprises first information, wherein the first information is used to indicate a first positioning model; and
the compensation information is used to compensate for the error caused by the interference factor affecting the first positioning model.

23. The method according to claim 21 or 22, wherein
the positioning indication information comprises second information, wherein the second information comprises at least one of:
compensation model information, or configuration information of a second reference signal;
wherein the compensation model information is used to indicate a compensation model, the compensation model being used to acquire the compensation information; and the second reference signal is different from a first reference signal, the first reference signal being used for positioning by a first positioning model.

24. The method according to claim 23, wherein
in a case where the second information comprises the configuration information of the second reference signal, the compensation information is determined based on the second reference signal; and/or
in a case where the second information comprises the compensation model information, the compensation information is determined based on the compensation model.

25. The method according to claim 23 or 24, wherein the second reference signal comprises at least one of:
a positioning reference signal (PRS), a sounding reference signal (SRS), a channel state information-reference signal (CSI-RS), or a synchronization signal and physical broadcast channel (PBCH) block (SSB).

26. The method according to claim 25, wherein different interference factors correspond to different second reference signals.

27. The method according to claim 25 or 26, wherein a configuration of time-frequency resources of the second reference signal is associated with an application duration of the first positioning model.

28. The method according to any one of claims 23 to 27, wherein in a case where the first device is the terminal device, the compensation model is trained by the terminal device, or the compensation model is trained and indicated to the terminal device by a network device.

29. The method according to claim 28, wherein a training dataset of the compensation model is the same as, or different from, a training dataset of the first positioning model.

30. The method according to any one of claims 23 to 29, wherein an input of the compensation model comprises at least one of:
a measured value of the interference factor, or a measured value calculated based on configuration information of a reference signal.

31. The method according to any one of claims 23 to 30, wherein the compensation information is used to compensate for one of:
a location output by the first positioning model;
an intermediate result output by the first positioning model, wherein the intermediate result is used for location determination;
a measurement error; or
a measured value of the interference factor.

32. The method according to any one of claims 21 to 31, wherein the interference factor comprises at least one of:
a network synchronization error;
a timing error;
a transmit power level;
a signal-to-noise ratio (SNR);
a signal-to-interference-plus-noise ratio (SINR); or
a channel estimation error.

33. The method according to any one of claims 22 to 32, wherein the first positioning model is associated with at least one of:
a value of the interference factor, or
a value range of the interference factor.

34. The method according to any one of claims 23 to 33, wherein the positioning indication information is carried or configured by at least one of:
being carried in a positioning assistance data information element (IE);
being carried in a position system information block (posSIB); or
being configured via radio resource control (RRC) signaling.

35. The method according to any one of claims 22 to 34, further comprising:
transmitting third information to the first device, wherein the third information is used to indicate whether to transmit reporting information to a network device, and the reporting information comprises at least one of:
a location result, or the compensation information.

36. The method according to claim 35, wherein in a case where the third information indicates transmitting the reporting information to the network device, the reporting information is associated with at least one of:
a positioning reference signal (PRS) resource, a sounding reference signal (SRS) resource, a measurement timestamp, or a timestamp corresponding to the compensation information.

37. A positioning apparatus, comprising:
an information acquisition module, configured to acquire positioning indication information; and
a positioning module, configured to determine location information and compensation information based on the positioning indication information;
wherein the location information is used to indicate a location of a terminal device, and the compensation information is used to compensate for an error caused by an interference factor affecting the location information.

38. The apparatus according to claim 37, wherein
the positioning indication information comprises first information, wherein the first information is used to indicate a first positioning model; and
the compensation information is used to compensate for the error caused by the interference factor affecting the first positioning model.

39. The apparatus according to claim 37 or 38, wherein
the positioning indication information comprises second information, wherein the second information comprises at least one of:
compensation model information, or configuration information of a second reference signal;
wherein the compensation model information is used to indicate a compensation model, the compensation model being used to acquire the compensation information; and the second reference signal is different from a first reference signal, the first reference signal being used for positioning by a first positioning model.

40. The apparatus according to claim 39, wherein
in a case where the second information comprises the configuration information of the second reference signal, the compensation information is determined based on the second reference signal; and/or
in a case where the second information comprises the compensation model information, the compensation information is determined based on the compensation model.

41. The apparatus according to claim 39 or 40, wherein the second reference signal comprises at least one of:
a positioning reference signal (PRS), a sounding reference signal (SRS), a channel state information-reference signal (CSI-RS), or a synchronization signal and physical broadcast channel (PBCH) block (SSB).

42. The apparatus according to claim 41, wherein different interference factors correspond to different second reference signals.

43. The apparatus according to claim 41 or 42, wherein a configuration of time-frequency resources of the second reference signal is associated with an application duration of the first positioning model.

44. The apparatus according to any one of claims 39 to 43, wherein the first device is the terminal device, and
the compensation model is trained by the terminal device, or
the compensation model is trained and indicated to the terminal device by a network device.

45. The apparatus according to claim 44, wherein a training dataset of the compensation model is the same as, or different from, a training dataset of the first positioning model.

46. The apparatus according to any one of claims 39 to 45, wherein an input of the compensation model comprises at least one of:
a measured value of the interference factor, or a measured value calculated based on configuration information of a reference signal.

47. The apparatus according to any one of claims 39 to 46, wherein the compensation information is used to compensate for one of:
a location output by the first positioning model;
an intermediate result output by the first positioning model, wherein the intermediate result is used for location determination;
a measurement error; or
a measured value of the interference factor.

48. The apparatus according to any one of claims 37 to 47, wherein the interference factor comprises at least one of:
a network synchronization error;
a timing error;
a transmit power level;
a signal-to-noise ratio (SNR);
a signal-to-interference-plus-noise ratio (SINR); or
a channel estimation error.

49. The apparatus according to any one of claims 38 to 48, wherein the first positioning model is associated with at least one of:
a value of the interference factor, or
a value range of the interference factor.

50. The apparatus according to any one of claims 39 to 49, wherein the positioning indication information is indicated by a network device.

51. The apparatus according to claim 50, wherein the positioning indication information is carried or configured by at least one of:
being carried in a positioning assistance data information element (IE);
being carried in a position system information block (posSIB); or
being configured via radio resource control (RRC) signaling.

52. The apparatus according to any one of claims 38 to 51, further comprising:
a receiving module, configured to receive third information, wherein the third information is used to indicate whether to transmit reporting information to a network device, and the reporting information comprises at least one of:
a location result, or the compensation information.

53. The apparatus according to claim 52, wherein in a case where the third information indicates transmitting the reporting information to the network device, the reporting information is associated with at least one of:
a positioning reference signal (PRS) resource, a sounding reference signal (SRS) resource, a measurement timestamp, or a timestamp corresponding to the compensation information.

54. The apparatus according to any one of claims 38 to 47 and 49 to 53, further comprising:
a value acquisition module, configured to acquire a first value of the interference factor, the first value being a current value of the interference factor;
wherein the positioning module is configured to determine the location information and the compensation information based on the positioning indication information in a case where the first value matches the first positioning model.

55. The apparatus according to claim 54, further comprising:
an adjustment module, configured to perform an adjustment operation in a case where the first value mismatches the first positioning model;
wherein the adjustment operation comprises one of:
fine-tuning parameters of the first positioning model;
switching to a second positioning model that matches a value of the interference factor; or
falling back to a conventional positioning method.

56. The apparatus according to claim 55, wherein the adjustment module is configured to:
acquire a difference between the first value and a second value of the interference factor, wherein the second value matches the first positioning model; and
in a case where the difference is between a first difference value and a second difference value, fine-tune the parameters of the first positioning model, wherein the first difference value is less than the second difference value;
in a case where the difference is between the second difference value and a third difference value, switch to the second positioning model that matches the value of the interference factor, wherein the second difference value is less than the third difference value; or
in a case where the difference is greater than the third difference value, fall back to the conventional positioning method.

57. A positioning apparatus, comprising:
a transmitting module, configured to transmit positioning indication information to a first device, causing the first device to determine location information and compensation information based on the positioning indication information;
wherein the location information is used to indicate a location of a terminal device, and the compensation information is used to compensate for an error caused by an interference factor affecting the location information.

58. The apparatus according to claim 57, wherein
the positioning indication information comprises first information, wherein the first information is used to indicate a first positioning model; and
the compensation information is used to compensate for the error caused by the interference factor affecting the first positioning model.

59. The apparatus according to claim 57 or 58, wherein
the positioning indication information comprises second information, wherein the second information comprises at least one of:
compensation model information, or configuration information of a second reference signal;
wherein the compensation model information is used to indicate a compensation model, the compensation model being used to acquire the compensation information; and the second reference signal is different from a first reference signal, the first reference signal being used for positioning by a first positioning model.

60. The apparatus according to claim 59, wherein
in a case where the second information comprises the configuration information of the second reference signal, the compensation information is determined based on the second reference signal; and/or
in a case where the second information comprises the compensation model information, the compensation information is determined based on the compensation model.

61. The apparatus according to claim 59 or 60, wherein the second reference signal comprises at least one of:
a positioning reference signal (PRS), a sounding reference signal (SRS), a channel state information-reference signal (CSI-RS), or a synchronization signal and physical broadcast channel (PBCH) block (SSB).

62. The apparatus according to claim 61, wherein different interference factors correspond to different second reference signals.

63. The apparatus according to claim 61 or 62, wherein a configuration of time-frequency resources of the second reference signal is associated with an application duration of the first positioning model.

64. The apparatus according to any one of claims 59 to 63, wherein in a case where the first device is the terminal device, the compensation model is trained by the terminal device, or the compensation model is trained and indicated to the terminal device by a network device.

65. The apparatus according to claim 64, wherein a training dataset of the compensation model is the same as, or different from, a training dataset of the first positioning model.

66. The apparatus according to any one of claims 59 to 65, wherein an input of the compensation model comprises at least one of:
a measured value of the interference factor, or a measured value calculated based on configuration information of a reference signal.

67. The apparatus according to any one of claims 59 to 66, wherein the compensation information is used to compensate for one of:
a location output by the first positioning model;
an intermediate result output by the first positioning model, wherein the intermediate result is used for location determination;
a measurement error; or
a measured value of the interference factor.

68. The apparatus according to any one of claims 57 to 67, wherein the interference factor comprises at least one of:
a network synchronization error;
a timing error;
a transmit power level;
a signal-to-noise ratio (SNR);
a signal-to-interference-plus-noise ratio (SINR); or
a channel estimation error.

69. The apparatus according to any one of claims 58 to 68, wherein the first positioning model is associated with at least one of:
a value of the interference factor, or
a value range of the interference factor.

70. The apparatus according to any one of claims 59 to 69, wherein the positioning indication information is carried or configured by at least one of:
being carried in a positioning assistance data information element (IE);
being carried in a position system information block (posSIB); or
being configured via radio resource control (RRC) signaling.

71. The apparatus according to any one of claims 58 to 70, wherein the transmitting module is further configured to transmit third information to the first device, wherein the third information is used to indicate whether to transmit reporting information to a network device, and the reporting information comprises at least one of:
a location result, or the compensation information.

72. The apparatus according to claim 71, wherein in a case where the third information indicates transmitting the reporting information to the network device, the reporting information is associated with at least one of:
a positioning reference signal (PRS) resource, a sounding reference signal (SRS) resource, a measurement timestamp, or a timestamp corresponding to the compensation information.

73. A communication device, wherein the terminal device comprises a processor, a memory, and a transceiver;
wherein the memory stores a computer program, wherein the computer program, when executed by the processor, causes the network device to perform the positioning method as defined in any one of claims 1 to 36.

74. A computer-readable storage medium, storing a computer program, wherein the computer program, when executed by a processor of a communication device, causes the communication device to perform the positioning method as defined in any one of claims 1 to 36.

75. A chip, comprising an integrated circuit and firmware arranged in the integrated circuit, wherein the chip, when running in a communication device, causes the communication device to perform the positioning method as defined in any one of claims 1 to 36.

76. A computer program product, comprising one or more computer instructions stored in a computer-readable storage medium, wherein the one or more computer instructions, when read from the computer-readable storage medium and executed by a processor of a communication device, cause the communication device to perform the positioning method as defined in any one of claims 1 to 36.

77. A computer program, wherein the computer program, when executed by a processor of a communication device, causes the communication device to perform the positioning method as defined in any one of claims 1 to 36.
